# EUROPÄISCHE PATENTSCHRIFT

(11) **EP 3 507 504 B1**
(45) Veröffentlichungstag und Bekanntmachung des Hinweises auf die Patenterteilung: **10.05.2023**
(21) Anmeldenummer: 17755114.0
(22) Anmeldetag: 09.08.2017
(51) Int. Cl.: F15B 1/26, F15B 21/04

(54) **TANK UND ELEKTROHYDRAULISCHES KOMPAKTAGGREGAT MIT EINEM TANK**
TANK, AND ELECTROHYDRAULIC COMPACT ASSEMBLY HAVING A TANK
RÉSERVOIR ET GROUPE ÉLECTRO-HYDRAULIQUE COMPACT COMPRENANT UN RÉSERVOIR

(30) Priorität: 05.09.2016 DE 102016216698
(43) Veröffentlichungstag der Anmeldung: 10.07.2019
(73) Patentinhaber: Robert Bosch GmbH, 70442 Stuttgart (DE)
(72) Erfinder: GUENDER, Andreas, 97729 Ramsthal (DE); BIEROD, Jan Lukas, 65520 Bad Camberg (DE); LACOUR, Rebecca, 63860 Rothenbuch (DE); MUEHLHAUSEN, Mark-Patrick, 63748 Aschaffenburg (DE); ISSINGER, Carina, 63741 Aschaffenburg (DE); MAIER, Ralf, 97788 Neuendorf (DE); HUETTL, Rene, 09116 Chemnitz (DE)
(86) Internationale Anmeldenummer: PCT/EP2017/070176
(87) Internationale Veröffentlichungsnummer: WO 2018/041565

(56) Entgegenhaltungen:
- EP-A1- 3 356 675
- WO-A1-2017/055137
- DE-A1- 19 652 706
- DE-U1- 29 705 717
- JP-A- S57 103 903
- KR-A- 20120 116 166

## Beschreibung

### Gebiet der Erfindung

Die Erfindung betrifft einen Tank für ein Kompaktaggregat gemäß dem Oberbegriff des Anspruchs 1 und ein elektrohydraulisches Kompaktaggregat mit einem Tank.

### Hintergrund der Erfindung

Aus dem Stand der Technik sind elektrohydraulische Kompaktaggregate bekannt, die eine Hydropumpe haben, die über eine elektrische Maschine antreibbar sind. Die Hydropumpe saugt hierbei über eine Saugleitung Öl aus einem Tank an und entlässt Öl über eine Rücklaufleitung in den Tank. Nachteilig bei den bekannten Kompaktaggregaten ist, dass der Tank üblicherweise ein vergleichsweise großes Tankvolumen aufweist.

In der DE 297 05 717 U1, der JP S57 103903 A und der DE 196 52 706 A1 sind Ausgestaltungen von hydraulischen Tanks offenbart.

In der nachveröffentlichten Druckschrift WO 2017/055145 A1 (bzw. EP 3 356 675 A1) ist ein Tank offenbart, der ein vergleichsweise geringes Tankvolumen aufweist. Des Weiteren ist ein Kompaktaggregat offenbart, das eine vergleichsweise kompakte Ausgestaltung hat. Der Tank hat Lamellenpakete zur Kühlung des Öls.

### Offenbarung der Erfindung

Gegenüber den erstgenannten vorveröffentlichten Druckschriften liegt der Erfindung die Aufgabe zugrunde die Kühlung des Öls zu ermöglichen bzw. zu verbessern.

Die Aufgabe hinsichtlich des Tanks wird gelöst gemäß den Merkmalen des Anspruchs 1 und hinsichtlich des Kompaktaggregats gemäß den Merkmalen des Anspruchs 11.

Vorteilhafte Weiterbildungen der Erfindung sind Gegenstand der Unteransprüche.

Erfindungsgemäß ist ein Tank für ein Kompaktaggregat vorgesehen. Dieser hat eine, insbesondere etwa zylindrische, Außenwandung. Diese kann eine, insbesondere etwa zylindrische, Innenwandung umgreifen und zusammen mit der Innenwandung einen Ringraum begrenzen. Der Ringraum ist vorzugsweise zumindest bodenseitig mit einer, insbesondere ringförmigen, Bodenwandung verschlossen. In den Ringraum mündet ein Zulaufanschluss oder Rücklaufanschluss und ein Ablaufanschluss oder Sauganschluss für ein Öl. Mit Vorteil kann eine Trennwand zum Trennen der Anschlüsse vorgesehen sein, damit Öl insbesondere nur in einer Umfangsrichtung vom Zulauf- zum Ablaufanschluss fließen kann. Alternativ oder zusätzlich kann vorgesehen sein, dass ein Schott zum Entgasen des Öls insbesondere stromabwärts des Zulaufanschlusses im Ringraum vorgesehen ist. Das Schott kann hierbei beispielsweise eine von Öl durchströmbare Schottöffnung unterhalb einer Oberkante des Schotts haben. Alternativ oder zusätzlich kann vorgesehen sein, dass sich ein Schott von der Außenwandung oder von der Innenwandung aus, oder dass sich mehrere Schotts jeweils von der Außenwandung oder von der Innenwandung aus, insbesondere etwa radial, in den Ringraum erstreckt/erstrecken. Dieses Schott oder diese Schotts ist/sind beispielsweise zur gegenüberliegenden Wandung beabstandet. Dieses Schott oder diese Schotts dient/dienen dann dazu, einen Strömungsweg des Öls zwischen den Anschlüssen zu verlängern und/oder den Tank zu versteifen. Dabei ist im Ringraum zumindest eine von dem Öl durchströmbare Kühlvorrichtung oder ein Kühlpaket vorgesehen.

Die Lösung mit der Trennwand hat den Vorteil, dass durch die Trennwand Öl nur in einer Richtung vom Zulaufanschluss zum Ablaufanschluss fließen kann, womit ein Zeitraum, in dem das Öl gekühlt und/oder entgast ist, vergleichsweise lang ist. Dies wiederum führt dazu, dass ein Volumen des Tanks im Vergleich zum Stand der Technik verringert werden kann, was wiederum zu einer Reduzierung eines Einbauraums der Gesamtanlage führen kann. Mit dem Schott zum Entgasen ist ebenfalls die Entgasung des Öls verbessert, was wiederum zu einer Verringerung des Tankvolumens führt. Durch das Schott oder die Schotts zur Verlängerung des Strömungswegs kann ein Zeitraum zum Abführen von Wärme und zur Entgasung mit vorrichtungstechnisch geringem Aufwand verlängert werden. Hierdurch ist wiederum eine Verringerung des Tankvolumens ermöglicht. Des Weiteren ist vorteilhaft, dass die im Ringraum angeordnete Kühlvorrichtung das Öl direkt im Tank kühlen kann, was den Wirkungsgrad der Kühlung erhöhen kann und somit wiederum zu einem verringerten Tankvolumen führen kann. Außerdem führt die Anordnung der Kühlvorrichtung im Ringraum zu einer äußerst kompakten Ausgestaltung des Tanks. Somit führt der erfindungsgemäße Tank vorteilhafterweise zu einer Verringerung des Tankvolumens, einer verbesserten Tankausnutzung, einer Vermeidung von separaten Kühlvorrichtungen, die beispielsweise Kühler oder Wärmetauscher aufweisen, zu einer Reduzierung des Einbauraums und zur Vermeidung von Ansaugen von Luftblasen über den Sauganschluss, da die Luftblasen bei der Entgasung gezielt im Tank abgeschieden werden. Mit anderen Worten ist ein Tank mit einer entgasungs- und kühlungsoptimierten Tankgeometrie ermöglicht. Dies erfolgt insbesondere durch eine Optimierung einer Strömungsführung mittels zumindest einer Trennwand im ringförmigen Tank und/oder durch Schotts zum Entgasen und Verlängern des Strömungswegs zwischen Rücklauf- und Sauganschluss und/oder über eine Kühlvorrichtung im Ringraum. Des Weiteren kann durch den erfindungsgemäßen Tank eine Leistungsdichte vergrößert werden. Außerdem hat sich gezeigt, dass eine Akustik verbessert ist. Zudem führt die kompaktere Ausgestaltung zu einer erhöhten Robustheit des Tanks.

Dabei hat die Kühlvorrichtung eine Mehrzahl von, insbesondere etwa gleichmäßig beabstandeten, Lamellen. Deren Großseiten erstrecken sich vorzugsweise etwa in Strömungsrichtung und/oder etwa horizontal. Mit ihren Langseiten können sich die Lamellen etwa in einer radialen Richtung erstrecken. Erfindungsgemäß sind die Lamellen radial innen und/oder radial außen und/oder bodenseitig und/oder deckenseitig von einer Labyrinthdichtung umfasst, wodurch eine aktive Durchströmung der Lamellen, die als Lamellenpaket ausgebildet sind, erfolgt. Mit anderen Worten wird durch gezielt angeordnete Strömungsführungen (Labyrinthdichtungen) die Ölströmung durch die Lamellen gezwungen und ein Vorbeiströmen des Öls an den Lamellen zumindest weitestgehend verhindert, was zu einer verbesserten Kühlung des Öls führt.

Vorzugsweise sind der Zulaufanschluss benachbart zur ersten Trennwandseite der Trennwand und der Ablaufanschluss benachbart zur zweiten Trennwandseite der Trennwand angeordnet, um einen möglichst langen Strömungsweg vorzusehen. Die Trennwand verschließt vorzugsweise vollständig einen Strömungsquerschnitt. Somit wird die Trennwand vorzugsweise, insbesondere im Wesentlichen, weder seitlich noch oben oder unten vom Öl umströmt. Zum Halten der Trennwand können Nuten in die Innenwandung und Außenwandung ringraumseitig eingebracht sein, in die Trennwand eingesetzt ist. Denkbar wäre auch, in der Bodenwandung eine Nut vorzusehen. Ist eine Deckenwandung zum Abschließen des Ringraums ausgebildet, so ist denkbar, auch in diese eine Nut einzubringen. Alternativ ist denkbar, die Trennwand auf andere Weise im Tank zu befestigen oder diese zumindest abschnittsweise einstückig mit den Wandungen auszubilden.

In weiterer Ausgestaltung der Erfindung ist vorteilhafterweise beim Schott zum Entgasen ein Strömungsquerschnitt der Schottöffnung derart gewählt, dass die Strömungskraft, insbesondere eine Widerstandskraft zumindest eines Großteils, beispielsweise mehr als 70 %, der Luftblasen im Öl geringer ist als die Auftriebskraft dieser Luftblasen im Öl. Hierdurch wird ein Mitziehen der Luftblasen in den weiteren Tankbereich vermieden oder zumindest reduziert und die Luftblasen können im Bereich des beispielsweise horizontal ausströmenden Zulaufs an eine Öloberfläche steigen und abgeschieden werden, wodurch das Tankvolumen reduziert werden kann.

Das Schott zum Entgasen weist vorzugsweise eine Unterkante auf, die mit der Bodenwandung, der Außenwandung und der Innenwandung eine untere Schottöffnung zum Durchfließen des Öls begrenzen kann. Öl fließt dann vorzugsweise im Wesentlichen oder ausschließlich durch diese Schottöffnung. Das Schott zum Entgasen kann mit seiner Oberkante an einer Deckenwandung anliegen oder im Wesentlichen anliegen. Zum Haltern des Schotts können in die Innwandung und die Außenwandung ringraumseitig Nuten eingebracht sein, in die das Schott zum Entgasen eingesetzt ist. Die Nuten können dabei jeweils von der Bodenwandung beabstandet sein, um eine Eintauchtiefe des Schotts in Vertikalrichtung zu begrenzen. Durch die Nuten ist denkbar, das Schott durch ein anderes Schott zu ersetzen, das beispielsweise eine andere geometrische Ausgestaltung hat, was insgesamt zu einem modularen System führt.

Das Schott zum Entgasen kann benachbart zum Zulaufanschluss vorgesehen sein. Der Zulaufanschluss ist dann in Umfangsrichtung des Tanks gesehen beispielsweise zwischen der Trennwand und dem Schott zum Entgasen ausgebildet.

Zur Verlängerung des Strömungswegs sind zumindest zwei Schotts vorgesehen, die sich beispielsweise wechselweise von der Außenwandung und der Innenwandung erstrecken. Die Schotts sind vorzugsweise in Strömungsrichtung oder in Umfangsrichtung des Tanks gesehen voneinander beabstandet. Vorzugsweise sind die Schotts hierbei oberhalb und unterhalb nicht umströmbar, wodurch vorzugsweise nur eine Seitenkante der Schotts umströmbar ist. Vorrichtungstechnisch einfach können die Schotts einstückig mit der Außenwandung oder der Innenwandung verbunden sein. Zusätzlich kann eine einstückige Verbindung mit der Bodenwandung erfolgen. Denkbar ist, dass die Schotts zusammen mit den Wandungen in einem Kunststoffspritzgussverfahren hergestellt sind.

Die Lamellen können in weiterer Ausgestaltung der Erfindung vorrichtungstechnisch einfach mit zumindest einem Wärmerohr, insbesondere in Form eines Wärmesiphons oder einer Heatpipe, verbunden sein. Hierdurch kann auf einfache Weise ohne externe Energiezufuhr Wärme von den Lamellen weggeführt werden, womit das Öl vorrichtungstechnisch einfach kühlbar ist. Das zumindest eine Wärmerohr erstreckt sich vorzugsweise etwa in Vertikalrichtung. Zur verbesserten Wärmeabfuhr sind die Lamellen bevorzugterweise aus einem wärmeleitfähigen Material, wie beispielsweise Aluminium, gebildet. Um eine Wärmeleitfähigkeit zwischen den Lamellen und dem zumindest einen Wärmerohr zu verbessern, kann ein Wärmeleiter zwischen den Lamellen und dem Wärmerohr vorgesehen sein. Bei dem Wärmeleiter handelt es sich beispielsweise um ein Lot. Über dieses können die Lamellen auch jeweils fest mit dem zumindest einen Wärmerohr verbunden werden. Für das Wärmerohr oder ein jeweiliges Wärmerohr weisen die Lamellen jeweils eine Durchgangsbohrung auf, die für das Wärmerohr oder für ein jeweiliges Wärmerohr vorzugsweise in Vertikalrichtung etwa in Deckung sind. Das zumindest eine Wärmerohr kann in weiterer Ausgestaltung der Erfindung mit einer, insbesondere oben, insbesondere außerhalb des Ringraums, vorgesehenen, Wärmesenke, insbesondere in Form eines Wärmetauschers, in Wirkverbindung stehen.

In weiterer Ausgestaltung der Erfindung ist eine Anzahl und/oder ein Abstand der Lamellen derart gewählt, dass eine Aufstauung stromaufwärts im Normalbetrieb des Tanks erfolgt. Beispielsweise soll die Aufstauung etwa 30 bis 40mm betragen. Diese Aufstauung soll vorzugsweise bei einem definierten Volumenstrom, von beispielsweise 35 l/min, und einer kinematischen Viskosität von etwa 30 bis 50 mm/s² auftreten. Vorzugsweise ist die in Vertikalrichtung gesehen oberste Lamelle im Normalbetrieb nicht überströmt, so dass Öl im Normalbetrieb unterhalb von dieser strömt. Mit anderen Worten ist der Abstand der Lamellen derart gewählt, dass bei einer tolerierten Aufstauung vor dem Lamellenpaket ein optimaler Wärmeübergang vom Öl auf die Lamellen erfolgt. Ein Überströmen der obersten Lamelle soll dabei vorzugsweise im Kühlbetrieb oder im Normalbetrieb bei dem beispielhaft genannten maximal definierten Volumenstrom (35l/min) und der beispielhaft genannten Viskosität (etwa 30 bis 50 mm/s²⁾ ausgeschlossen sein.

In weiterer Ausgestaltung der Erfindung ist die oberste Lamelle in vertikaler Richtung gesehen unterhalb des oberen Ringraumendes oder unterhalb der Deckenwandung angeordnet. Vorzugsweise ist ein Abstand zwischen dem Ringraumende und der obersten Lamelle in vertikaler Richtung gesehen größer als ein Abstand zwischen zwei benachbarten Lamellen. Somit kann der zwischen der obersten Lamelle und der Deckenwandung begrenzte Öffnungsquerschnitt als eine Art Überlauföffnung dienen. Somit kann weiter sichergestellt sein, dass beispielsweise bei einem Kaltstart, bei dem das Öl eine hohe Viskosität aufweisen kann, dieses sich nicht vor dem Lamellenpaket staut, sondern über die oberste Lamelle fließen kann, womit wiederum ein Leerlaufen des Ablaufanschlusses vermieden werden kann. Durch das Überströmen der obersten Lamelle wird auch eine Kühlfunktion verringert, da weniger Öl durch die Lamellen strömt, was vorteilhafterweise beim Kaltstart zu einer schnelleren Erwärmung des Öls auf eine optimale Betriebstemperatur von beispielsweise 40 bis 50°C führt.

Vorzugsweise sind in dem Tank mehrere Kühlvorrichtungen, beispielsweise drei, vorgesehen. Diese können in Strömungsrichtung gesehen in Reihe angeordnet sein.

In weiterer Ausgestaltung der Erfindung kann die Labyrinthdichtung von einem radial innen im Ringraum sich etwa in Vertikalrichtung erstreckenden Steg und/oder von einem radial außen im Ringraum sich etwa in Vertikalrichtung erstreckenden Steg gebildet sein. Der Steg oder ein jeweiliger Steg kann hierbei Schlitze aufweisen, wobei ein jeweiliger Schlitz zur Aufnahme einer Lamelle vorgesehen ist. In weiterer Ausgestaltung der Erfindung kann die Labyrinthdichtung bodenseitig einen Steg haben. Dieser ist beispielsweise mit dem seitlichen Steg oder den seitlichen Stegen verbunden, womit die Stege zumindest teilweise eine Art Rahmen bilden. Denkbar ist auch, den Steg oder die Stege einstückig mit der entsprechenden Wandung oder den entsprechenden Wandungen zu verbinden, indem diese beispielsweise in einem Kunststoffspritzgussverfahren hergestellt sind.

Bevorzugterweise kann der Tank deckenseitig mit einem Abschlussdeckel verschlossen sein. In kompakter Weise kann der Abschlussdeckel hierbei als Wärmesenke für das zumindest eine Wärmerohr dienen. Bei der Wärmesenke handelt es sich beispielsweise um einen Wärmetauscher, welcher von Luft und/oder Wasser durchströmbar ist. Somit ist das zumindest eine Wärmerohr an seiner Oberseite mit dem Abschlussdeckel verbunden und/oder kann beispielsweise in eine Aussparung des Abschlussdeckels eintauchen. Des Weiteren ist denkbar, dass der Abschlussdeckel zum Halten von Bauteilen des Kompaktaggregats dient.

Vorzugsweise weist eine Mündungsöffnung des Ablaufanschlusses etwa in Strömungsrichtung, damit das Öl mit geringem Strömungswiderstand in den Ablaufanschluss einströmen kann. Der Ablaufanschluss kann des Weiteren Teil einer Ablaufleitung sein, die sich vorzugsweise etwa tangential aus dem Ringraum durch die Innenwandung erstreckt, was zu einer Verringerung von Druckverlusten der Ölströmung im Tank führt.

Der Zulaufanschluss mündet vorzugsweise in einem oberen Bereich in den Ringraum des Tanks.

Erfindungsgemäß ist ein elektrohydraulisches Kompaktaggregat mit einem Tank gemäß einem oder mehrerer der vorhergehenden Aspekte vorgesehen. Dieses kann einen hydraulischen Verbraucher aufweisen, der insbesondere von der Innenwandung zumindest abschnittsweise umfasst ist. Bei dem hydraulischen Verbraucher handelt es sich beispielsweise um eine Hydromaschine, insbesondere um eine hydrostatische Pumpe. Des Weiteren kann das Kompaktaggregat eine elektrische Maschine, insbesondere einen Elektromotor, haben, der beispielsweise oberhalb des Tanks an diesem angeordnet ist. Dieser kann zum Antreiben des Verbrauchers dienen. Der Verbraucher kann beispielsweise Öl aus dem Ablaufanschluss saugen und in den Zulaufanschluss fördern.

### Kurze Beschreibung der Zeichnungen

Ein bevorzugtes Ausführungsbeispiel der Erfindung wird im Folgenden anhand schematischer Zeichnungen näher erläutert. Es zeigen:
Figur 1 in einem Querschnitt einen erfindungsgemäßen Tank,
Figur 2 in einem Längsschnitt eine Kühlvorrichtung des Tanks aus Figur 1 und
Figur 3 in einem Längsschnitt ein Schott zur Entgasung des Tanks aus Figur 1.

### Detaillierte Beschreibung der bevorzugten Ausführungsformen

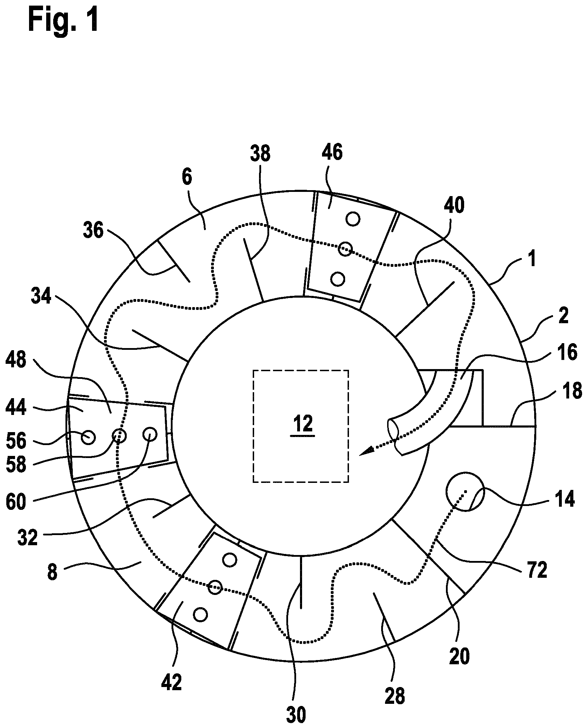

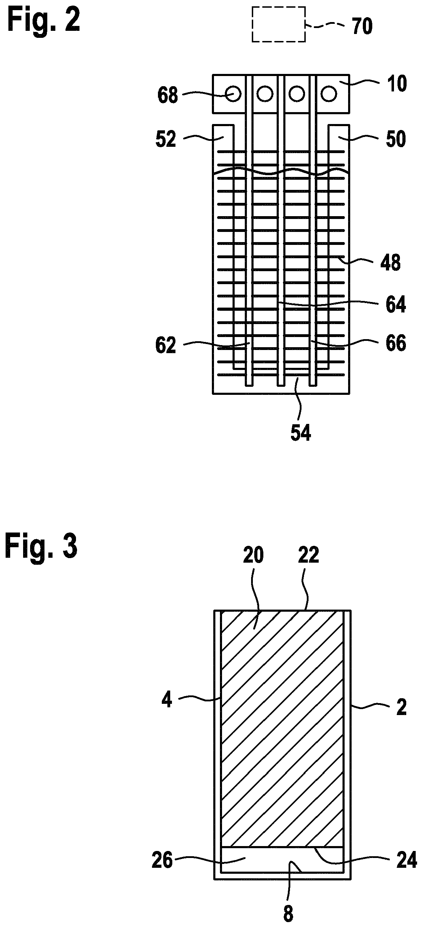

Gemäß Figur 1 hat ein Tank 1 für ein Kompaktaggregat eine etwa kreiszylindrische Außenwandung 2, die eine etwa kreiszylindrische Innenwandung 4 umgreift, wobei die Wandungen 2, 4 etwa koaxial zueinander angeordnet sind. Zusammen begrenzen die Wandungen 2 und 4 einen Ringraum 6. Dieser ist bodenseitig von einer ringförmigen Bodenwandung 8 begrenzt. Die Wandungen 2 und 4 erstrecken sich etwa in Vertikalrichtung, wobei die Bodenwandung 8 in Vertikalrichtung gesehen dann unten angeordnet ist. Oben kann der Ringraum 6 von einer nicht dargestellten Deckenwandung abgeschlossen sein, die beispielsweise durch einen Abschlussdeckel 10, siehe Figur 2, gebildet sein kann. In dem von der Innenwandung 4 in Figur 1 begrenzten Innenraum kann eine Hydropumpe 12 angeordnet sein, die gemäß Figur 1 mit einer Strichlinie schematisch angedeutet ist. Die Hydropumpe 12 kann über einen Verbraucher und einen sich daran anschließenden Rücklaufanschluss oder einen Zulaufanschluss 14 Öl in den Ringraum 6 entlassen. Über einen Saugleitungsanschluss oder über einen Ablaufanschluss 16, der als etwa tangential zum Tank 1 angeordnete Pumpenansaugung ausgebildet ist, kann die Hydropumpe 12 dann Öl vom Ringraum 6 saugen.

Gemäß Figur 1 ist eine Trennwand 18 vorgesehen, die einen Rücklaufbereich von einem Saugbereich separiert. Diese erstreckt sich etwa in radialer Richtung und vertikaler Richtung. Zum Entgasen des im Ringraum 6 fließenden Öls ist gemäß Figur 1 des Weiteren ein Schott 20 vorgesehen, das gemäß Figur 3 in einem Querschnitt dargestellt ist. Das Schott 20 ist mit seinen Seitenkanten in nicht dargestellte Nuten der Außenwandung 2 und Innenwandung 4 eingesetzt. Eine Oberkante 22 des Schotts 20 liegt dabei an einer nicht dargestellten Deckenwandung zumindest abschnittsweise, insbesondere dichtend, an. Eine Unterkante 24 des Schotts 20 ist zur Bodenwandung 8 beabstandet und begrenzt hierdurch eine Schottöffnung 26. Das gemäß Figur 1 über den Zulaufanschluss 14 oberhalb des Ringraums 6 einströmende Öl wird dann hin zur Bodenwandung 8 geführt, um über die untere Schottöffnung 26 weiter strömen zu können. Durch das unten offene Schott 20 ist somit eine Luftblasenabscheidung verbessert.

Gemäß Figur 1 sind zur Verlängerung eines Strömungswegs weitere, insbesondere dreidimensionale, Schotts 28 bis 40 vorgesehen. Diese sind abwechselnd so durchbrochen, dass bei minimaler Erhöhung der Strömungsgeschwindigkeit eine optimale Tankausnutzung gewährleistet werden kann.

Gemäß Figur 1 sind zur Kühlung des Öls mehrere Kühlvorrichtungen 42, 44 und 46 oder Kühlpakete im Ringraum 6 angeordnet. Die Kühlvorrichtung 42 ist dabei in Figur 2 in einem Längsschnitt dargestellt. Diese hat eine Vielzahl von Lamellen 48, die etwa im Parallelabstand, insbesondere mit einem etwa gleichen Abstand, übereinander angeordnet sind. Die Lamellen 48 sind dabei in Schlitzen von seitlichen Stegen 50 und 52 aufgenommen. Zusätzlich ist ein bodenseitiger Steg 54 vorgesehen. Die Stege 50 bis 54 dienen dabei als Labyrinthdichtungen, um ein seitliches Umströmen der Lamellen 48 zu verringern oder zu verhindern. Gemäß Figur 1 weist eine jeweilige Lamelle 48 drei beabstandete Durchgangsbohrungen 56, 58 und 60 auf. Diese sind in Radialrichtung gesehen in Reihe angeordnet. Gemäß Figur 2 sind durch die Durchgangsbohrungen 56 bis 60 Wärmerohre 62, 64 und 66 geführt, die etwa im Parallelabstand zueinander angeordnet sind und sich etwa in Vertikalrichtung erstrecken. Die Wärmerohre 62 bis 66 erstrecken sich dabei etwa ausgehend vom Steg 54 in den Abschlussdeckel 10. Dieser dient als Wärmesenke und weist eine oder mehrere Kühlwasserführungen 68 auf. An den Abschlussdeckel 10 kann neben der Hydropumpe 12 gemäß Figur 2 auch ein Elektromotor 70 auf der von der Hydropumpe 12 wegweisenden Seite befestigt sein, wobei der Elektromotor schematisch mit einer Strichlinie dargestellt ist.

Gemäß Figur 1 verläuft eine Ölströmung etwa entlang eines mit einer Strichlinie eingezeichneten Pfades 72.

Offenbart ist ein Tank mit einem ringförmigen Tankraum. In diesen ist eine Trennwand zum Trennen eines Zulaufanschlusses von einem Ablaufanschluss vorgesehen. Alternativ oder zusätzlich ist ein Schott zum Entgasen des Öls in dem Tank vorgesehen. Des Weiteren ist alternativ oder zusätzlich zumindest ein Schott zur Verlängerung eines Strömungswegs des Öls vorgesehen. Denkbar ist auch, alternativ oder zusätzlich eine Kühlvorrichtung in dem Ringraum anzuordnen.

### Bezugszeichenliste

- 1: Tank
- 2: Außenwandung
- 4: Innenwandung
- 6: Ringraum
- 8: Bodenwandung
- 10: Abschlussdeckel
- 12: Hydropumpe
- 14: Zulaufanschluss
- 16: Ablaufanschluss
- 18: Trennwand
- 20: Schott zur Entgasung
- 22: Oberkante
- 24: Unterkante
- 26: Schottöffnung
- 28 bis 40: Schott
- 42 bis 46: Kühlvorrichtung
- 48: Lamellen
- 50 bis 54: Steg
- 56 bis 60: Durchgangsbohrung
- 62 bis 66: Wärmerohr
- 68: Kühlwasserführung
- 70: Elektromotor
- 72: Pfad

## Patentansprüche

1. Tank für ein Kompaktaggregat mit einer Außenwandung (2), die eine Innenwandung (4) umgreift und die mit der Innenwandung (4) einen Ringraum (6) begrenzt, der bodenseitig mit einer Bodenwandung (8) verschlossen ist, wobei in den Ringraum (6) ein Zulaufanschluss (14) und ein Ablaufanschluss (16) für ein Öl mündet, wobei im Ringraum (6) zumindest eine von dem Öl durchströmbare Kühlvorrichtung (42 - 46) vorgesehen ist, die eine Mehrzahl von Lamellen (48) hat, **dadurch gekennzeichnet, dass** die Lamellen (48) radial innen und/oder radial außen und/oder bodenseitig und/oder deckenseitig von einer Labyrinthdichtung (50, 52, 54) umgriffen sind.

2. Tank nach Anspruch 1, wobei eine Trennwand (18) zum Trennen der Anschlüsse (14, 16) vorgesehen ist.

3. Tank nach einem der vorhergehenden Ansprüche, wobei ein Schott (20) zum Entgasen des Öls im Ringraum (6) vorgesehen ist, das eine von Öl durchströmbare Schottöffnung aufweist.

4. Tank nach einem der vorhergehenden Ansprüche, wobei sich ein Schott (28 - 40) von der Außenwandung (2) oder von der Innenwandung (4) aus oder wobei sich mehrere Schotts (28 - 40) jeweils von der Außenwandung (2) oder von der Innenwandung (4) aus in den Ringraum (6) erstreckt/erstrecken, um einen Strömungsweg des Öls zwischen den Anschlüssen (14, 16) zu verlängern und/oder um den Tank (1) zu versteifen.

5. Tank nach Anspruch 3, wobei das Schott (20) zum Entgasen eine Unterkante (24) hat, die mit der Bodenwandung (8), der Außenwandung (2) und der Innenwandung (4) eine untere Schottöffnung (26) zum Durchfließen des Öls begrenzt.

6. Tank nach Anspruch 3 oder 5, wobei zumindest zwei Schotts (28 - 40) zur Verlängerung des Strömungswegs vorgesehen sind, die sich wechselweise von der Außenwandung (2) und der Innenwandung (4) erstrecken.

7. Tank nach Anspruch 1, wobei die Lamellen (48) mit zumindest einem Wärmerohr (62 - 66) in Wirkverbindung stehen.

8. Tank nach Anspruch 7, wobei das zumindest eine Wärmerohr (62 - 66) mit einer Wärmesenke, die insbesondere durch einen Abschlussdeckel (10) des Tanks (1) gebildet ist, in Wirkverbindung steht.

9. Tank nach einem der Ansprüche 1, 7, oder 8, wobei die Labyrinthdichtung von einem radial inneren Steg (52) und/oder von einem radial äußeren Steg (50) gebildet ist.

10. Tank nach Anspruch 2, wobei eine Mündungsöffnung des Ablaufanschlusses (16) etwa in Strömungsrichtung und/oder in Richtung weg von der Trennwand (18) weist.

11. Elektrohydraulisches Kompaktaggregat mit einem Tank gemäß einem der vorhergehenden Ansprüche mit einem hydraulischen Verbraucher (12) und mit einer elektrischen Maschine (70) zum Antreiben des Verbrauchers (12), wobei mit dem Verbraucher (12) Öl aus dem Ablaufanschluss (16) saugbar und in den Zulaufanschluss (14) förderbar ist.

## Claims

1. Tank for a compact assembly, comprising an outer wall (2), which encompasses an inner wall (4) and which, together with the inner wall (4), defines an annular space (6) which is closed at the bottom by a bottom wall (8), wherein an inlet connection (14) and an outlet connection (16) for an oil open out into the annular space (6), wherein at least one cooling device (42-46) through which the oil can flow is provided in the annular space (6), which cooling device has a plurality of blades (48), **characterized in that** the blades (48) are encompassed radially inwardly and/or radially outwardly and/or at the bottom and/or top thereof by a labyrinth seal (50, 52, 54).

2. Tank according to Claim 1, wherein a dividing wall (18) is provided to separate the connections (14, 16).

3. Tank according to either of the preceding claims, wherein a partition (20) for degassing the oil is provided in the annular space (6), which partition has a partition opening through which oil can flow.

4. Tank according to any of the preceding claims, wherein a partition (28-40) extends from the outer wall (2) or from the inner wall (4), or wherein a plurality of partitions (28-40) extend in each case from the outer wall (2) or from the inner wall (4) into the annular space (6), to extend a flow path of the oil between the connections (14, 16) and/or to reinforce the tank (1).

5. Tank according to Claim 3, wherein the partition (20) for degassing has a lower edge (24) which, together with the bottom wall (8), the outer wall (2) and the inner wall (4), defines a lower partition opening (26) for the oil to flow through.

6. Tank according to either Claim 3 or Claim 5, wherein at least two partitions (28-40) are provided to extend the flow path, which partitions extend alternately from the outer wall (2) and the inner wall (4).

7. Tank according to Claim 1, wherein the blades (48) are operatively connected to at least one heat pipe (62-66) .

8. Tank according to Claim 7, wherein the at least one heat pipe (62-66) is operatively connected to a heat sink, which is formed in particular by an end cover (10) of the tank (1).

9. Tank according to any of Claims 1, 7 and 8, wherein the labyrinth seal is formed by a radially inner web (52) and/or by a radially outer web (50).

10. Tank according to Claim 2, wherein a discharge opening of the outlet connection (16) points approximately in the flow direction and/or in the direction away from the dividing wall (18).

11. Electrohydraulic compact assembly, comprising a tank according to any of the preceding claims, having a hydraulic load (12) and having an electric machine (70) for driving the load (12), wherein oil can be sucked out of the outlet connection (16) and conveyed into the inlet connection (14) by the load (12).

## Revendications

1. Réservoir destiné à un ensemble compact à paroi extérieure (2), qui entoure une paroi intérieure (4) et qui délimite avec la paroi intérieure (4) un espace annulaire (6) qui est fermé du côté fond par une paroi de fond (8), un raccord d'entrée (14) et un raccord de sortie (16) destinés à une huile débouchant dans l'espace annulaire (6), au moins un dispositif de refroidissement (42 - 46) à travers lequel l'huile peut s'écouler et qui comporte une pluralité de lamelles (48), étant prévu dans l'espace annulaire (6), **caractérisé en ce que** les lamelles (48) sont entourées par une garniture d'étanchéité à labyrinthe (50, 52, 54) radialement à l'intérieur et/ou radialement à l'extérieur et/ou du côté fond et/ou du côté supérieur.

2. Réservoir selon la revendication 1, une paroi de séparation (18) étant prévue pour séparer les raccords (14, 16).

3. Réservoir selon l'une des revendications précédentes, dans lequel une cloison étanche (20), qui comporte une ouverture de cloison par laquelle l'huile peut s'écouler, est prévue dans l'espace annulaire (6) pour le dégazage de l'huile.

4. Réservoir selon l'une des revendications précédentes, une cloison étanche (28-40) s'étendant depuis la paroi extérieure (2) ou la paroi intérieure (4) ou une pluralité de cloisons étanches (28-40) s'étendant chacune depuis la paroi extérieure (2) ou la paroi intérieure (4), jusque dans l'espace annulaire (6) pour allonger un chemin d'écoulement de l'huile entre les raccords (14, 16) et/ou pour rigidifier le réservoir (1).

5. Réservoir selon la revendication 3, la cloison étanche (20) de dégazage comportant un bord inférieur (24) qui délimite avec la paroi de fond (8), la paroi extérieure (2) et la paroi intérieure (4), une ouverture de cloison étanche inférieure (26) destinée à l'écoulement de l'huile.

6. Réservoir selon la revendication 3 ou 5, au moins deux cloisons étanches (28-40), qui s'étendent alternativement de la paroi extérieure (2) et de la paroi intérieure (4), étant prévues pour allonger le chemin d'écoulement.

7. Réservoir selon la revendication 1, les lamelles (48) étant reliées fonctionnellement à au moins un caloduc (62-66).

8. Réservoir selon la revendication 7, l'au moins un caloduc (62-66) étant relié fonctionnellement à un dissipateur thermique qui est formé notamment par une plaque de recouvrement (10) du réservoir (1).

9. Réservoir selon l'une des revendications 1, 7 ou 8, la garniture d'étanchéité à labyrinthe étant formée par une nervure radialement intérieure (52) et/ou par une nervure radialement extérieure (50).

10. Réservoir selon la revendication 2, dans lequel une ouverture d'embouchure du raccord de sortie (16) pointe approximativement dans le sens d'écoulement et/ou dans le sens opposé à la paroi de séparation (18) .

11. Ensemble compact électrohydraulique comprenant un réservoir selon l'une des revendications précédentes, un consommateur hydraulique (12) et une machine électrique (70) destinée à l'entraînement du consommateur (12), de l'huile pouvant être aspirée du raccord de sortie (16) et transportée dans le raccord d'entrée (14) avec le consommateur (12).
